Europäisches Patentamt

European Patent Office

Office européen des brevets

(11) Numéro de publication : **0 185 566**
**B1**

(12) **FASCICULE DE BREVET EUROPÉEN**

(45) Date de publication du fascicule du brevet :
28.06.89

(51) Int. Cl.⁴ : **B 23 K 1/08**

(21) Numéro de dépôt : 85402212.6

(22) Date de dépôt : 15.11.85

(54) **Machine de soudage.**

(30) Priorité : 15.11.84 FR 8417451

(43) Date de publication de la demande :
25.06.86 Bulletin 86/26

(45) Mention de la délivrance du brevet :
28.06.89 Bulletin 89/26

(84) Etats contractants désignés :
AT BE CH DE GB IT LI LU NL SE

(56) Documents cités :
EP-A- 0 118 091
FR-A- 2 502 525

(73) Titulaire : OUTILLAGES SCIENTIFIQUES ET DE LABO-
RATOIRES O.S.L. S.A.
Z.I. Carros - 2e Casier - Lot R
F-06510 Carros Industries (FR)

(72) Inventeur : Simonetti, Jean-Pierre
18, allée de Chanteraine
F-91190 Gif-Sur-Yvette (FR)

(74) Mandataire : Clanet, Denis et al
Cabinet Beau de Loménie 55, rue d'Amsterdam
F-75008 Paris (FR)

Jouve, 18, rue St-Denis, 75001 Paris, France

## Description

La présente invention concerne une machine de soudage à la vague pour composants électroniques montés sur des cartes de circuits imprimés.

Dans les machines de ce type, les cartes sont entraînées sur un convoyeur en déplacement horizontal ou en pente légèrement montante ou descendante et viennent lécher au cours de ce déplacement le sommet d'une vague d'alliage de soudure en fusion créée par une buse.

Il est essentiel, pour réaliser une soudure de qualité, d'obtenir un positionnement relatif, dans le sens vertical, extrêmement précis de la vague de soudure et des cartes en déplacement sur le convoyeur. A titre illustratif, on rappellera que ce positionnement doit être effectué à une fraction de millimètre près.

Pour ce faire, on a coutume de monter l'ensemble du pot de soudure, coiffé par la buse, sur des supports réglables dans le sens vertical qui servent à la fois à ajuster l'horizontalité de la buse et la hauteur de celle-ci.

Dans la mesure où le poids de l'ensemble pot de soudure/buse atteint fréquemment plusieurs centaines de kilogrammes, ces supports réglables doivent nécessairement être dimensionnés en conséquence et n'offrent pas la souplesse et la finesse de réglage souhaitables.

De plus, lorsque l'ensemble du pot de soudure est démonté pour la maintenance, il convient de procéder à nouveau aux réglages avant la remise en service de la machine.

Egalement, si pour des raisons quelconques il est nécessaire de modifier l'inclinaison du convoyeur, on doit également reprendre le réglage du pot de soudure en hauteur.

On note aussi que ce type d'agencement peut difficilement être motorisé si l'on désire rendre ce réglage automatique ou semi-automatique. Il faudrait en effet, associer aux supports réglables des moteurs de forte puissance, donc de coût élevé, sans d'ailleurs obtenir de gain sur la souplesse ou la finesse de réglage.

Il n'est pas non plus envisageable de se passer de réglage car les tolérances de fabrication et d'assemblage des divers éléments introduisent dans la machine neuve des écarts importants dans le sens vertical entre le pot de soudure et le convoyeur.

Enfin, ces machines de soudure comportent également un distributeur de flux et une unité de préchauffage, qui doivent également faire l'objet l'un et l'autre d'un réglage vertical précis par rapport aux cartes en déplacement sur le convoyeur.

Bien qu'il s'agisse là de dispositifs beaucoup plus légers que le pot de soudure, leur réglage en hauteur se heurte également à divers problèmes ;

la présence d'éclaboussures plus ou moins visqueuses autour du distributeur de flux,

la température élevée (de l'ordre de 400 °C) au voisinage de l'unité de préchauffage.

Dans le but de pallier ces inconvénients, la présente invention propose une machine de soudage à la vague comprenant un bâti, au moins un pot de soudure monté sur ledit bâti et comportant une buse destinée à produire ladite vague, un convoyeur monté sur ledit bâti et destiné à entraîner des cartes de circuits imprimés suivant un trajet sensiblement linéaire, et un dispositif de réglage en hauteur dudit pot de soudure, de manière à permettre l'ajustement en hauteur de ladite vague par rapport audit trajet, caractérisée en ce que ledit bâti comporte un chemin de déplacement, de même orientation générale que ledit convoyeur, sur lequel est monté ledit pot de soudure, ledit chemin et ledit trajet faisant entre eux un angle prédéterminé de faible valeur et ledit chemin ayant une inclinaison aussi faible que possible par rapport à l'horizontale, et un dispositif de réglage en position dudit pot de soudure le long dudit chemin de déplacement.

D'autres détails et avantages de l'invention apparaîtront clairement à la lecture de la description qui va suivre en se référant aux dessins annexés, dans lesquels :

la figure 1 est une vue en perspective de l'ensemble de la machine conforme à l'invention ;

la figure 2 est une vue de détail latérale de la machine de la figure 1, prise au niveau du pot de soudure ;

la figure 3 est une vue du pot de soudure prise suivant la flèche 3 à la figure 2 ; et

la figure 4 est une vue de dessus du pot de soudure illustré aux figures 2 et 3.

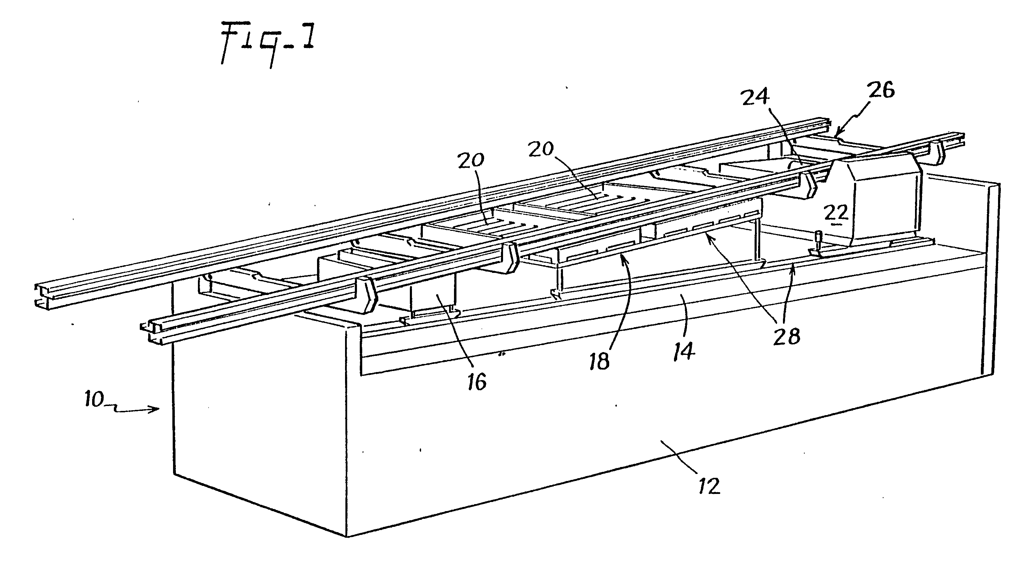

La machine de soudage 10 illustrée à la figure 1 comporte un bâti 12, de forme allongée, à la face supérieure duquel est fixée une tôle 14 définissant un plan d'installation.

Sur le plan d'installation sont montés successivement et de la gauche vers la droite en considérant la figure ;

un distributeur de flux 16, destiné à produire à sa partie supérieure une vague de mousse de produit de fluxage,

une unité de préchauffage 18, constituée de panneaux radiants 20 et destiné à réchauffer par rayonnement infrarouge des cartes de circuits imprimés,

un pot de soudure 22, destiné à produire à sa partie supérieure une vague d'alliage de soudure liquide au moyen d'une buse 24.

La machine comprend également un convoyeur 26, disposé au-dessus des dispositifs mentionnés ci-avant et destiné à entraîner des cartes de circuits imprimés (non représentées) disposées à plat, suivant un trajet rectiligne horizontal, ou en pente légèrement montante ou descendante.

Chaque carte de circuit imprimé est disposée sur le convoyeur de manière telle que sa face sur laquelle doivent être ménagées des soudures soit orientée vers le bas, et le trajet des cartes sur le convoyeur assure le passage de leurs faces inférieures successivement en regard du distributeur de flux, de l'ensemble de préchauffage puis du pot de soudure, afin que la face inférieure de la carte soit léchée par la vague de soudure créée par la buse du pot de soudure.

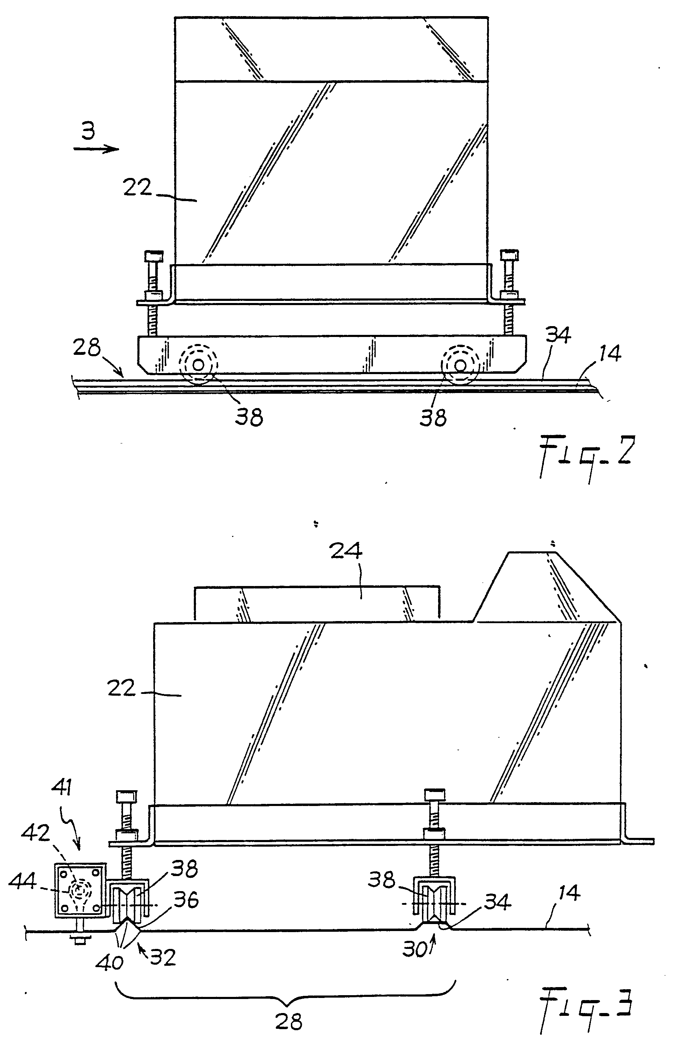

Le bâti 12 comporte un chemin de déplacement 28, plus précisément formé sur le plan d'installation 14 de la manière suivante (figures 2 à 4) ;

Le chemin de déplacement est défini par deux voies de roulement parallèles 30 et 32, la première consistant en une portée plane 34 et la seconde consistant en un rail 36, le pot de soudure étant monté sur les voies de roulement par l'intermédiaire de roulements 38, disposés approximativement aux quatre coins de la base du pot de soudure.

Le rail 36 est conformé à la manière d'un profilé de section triangulaire obtenu par des plis 40 ménagés dans la tôle 14. Outre le supportage du pot de soudure, le rail 36 a pour rôle d'assurer un guidage du pot de soudure lors de ses déplacements.

Dans l'exemple illustré, le convoyeur 26 est en pente légèrement montante et le plan d'installation 14, — donc le chemin de déplacement 28 — est horizontal. De la sorte, lorsqu'on déplace le pot de soudure le long du chemin de déplacement, on fait varier la distance verticale relative entre la buse du pot de soudure et le convoyeur, et cette variation peut être contrôlée de manière extrêmement précise et fiable malgré le poids élevé du pot de soudure puisque l'effort nécessaire au déplacement du pot de soudure le long du chemin de déplacement est très faible.

On remarquera ici que ce qui importe en réalité n'est pas tant l'horizontalité du chemin de déplacement, que l'on pourra disposer de manière légèrement inclinée par rapport à l'horizontale, mais le fait que le chemin de roulement et le convoyeur fassent entre eux un angle de faible valeur, de préférence inférieur à 10 degrés, ce qui permet d'obtenir la précision de réglage souhaitée. On prévoira bien entendu que le chemin de roulement fasse un angle aussi faible que possible par rapport à l'horizontale de telle sorte que les efforts nécessaires au déplacement du pot de soudure soient faibles en comparaison à son poids.

L'avantage de prévoir que seule l'une des voies de roulement consiste en un rail est que l'on peut se passer de réglage d'écartement entre les roulements 38 et/ou les voies de roulement 30, 32.

Le fait que le rail 36 soit obtenu par pliage de la tôle 14 a pour avantage de raidir cette dernière et donc que l'on peut simplifier la structure du bâti. Ceci permet également de disposer d'un chemin de roulement et de guidage sur toute la longueur de la machine.

En lieu et place des voies de roulement 30, 32, on pourra prévoir que le pot de soudure soit monté sur son chemin de déplacement par l'intermédiaire de glissières, de préférence garnies de matériau à faible coefficient de frottement, par exemple du PTFE (polytétrafluoroéthylène). Selon une autre variante, les roulements sont réalisés sous forme de cages et/ou patins à billes.

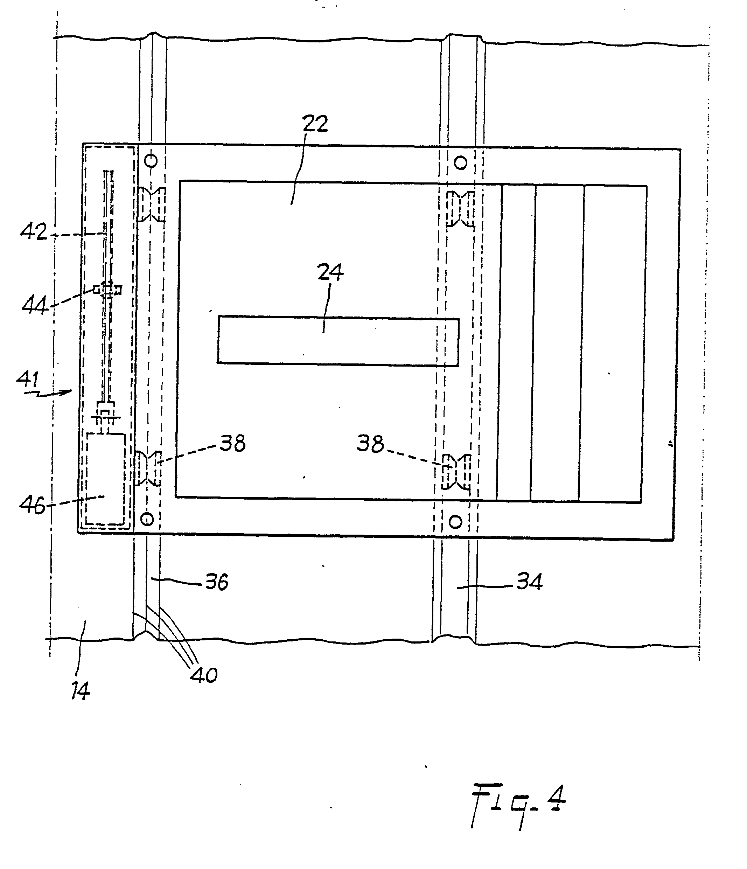

Comme illustré aux figures 3 et 4, la machine comporte un dispositif 41 de réglage en position du pot de soudure le long de son chemin de déplacement.

Ce dispositif, du type appelé communément vis-écrou, comporte une vis 42 montée à rotation sur le pot de soudure mais sans possibilité de se déplacer longitudinalement par rapport à ce dernier, et un écrou 44 monté fixe sur la tôle 14, de préférence dans une cage à rotule ou par l'intermédiaire d'un joint de cardan de manière à permettre l'alignement mutuel de la vis et de l'écrou. La mise en rotation de la vis provoque son déplacement par rapport à l'écrou et donc le déplacement du pot de soudure par rapport à son chemin de déplacement.

La démultiplication procurée par la coopération vis-écrou permet de régler de manière très précise la position du pot de soudure. Elle permet également de motoriser le dispositif de réglage, au moyen d'un moteur 46 de faible puissance dont l'arbre est accouplé directement à la vis 42.

Un autre avantage réside dans la non-réversibilité de ce dispositif de réglage qui procure un frein et un arrêt fiables pour le pot de soudure.

Bien entendu, le montage de la vis 42 et de l'écrou 44 pourra être inversé, la vis 42 étant montée sur le bâti et l'écrou 44 sur le pot de soudure.

Enfin, selon une disposition avantageuse de l'invention, le distributeur de flux et/ou l'ensemble de préchauffage sont également montés sur le chemin de déplacement 28.

Le réglage de leur position, dans le sens vertical, par rapport au convoyeur 26 sera donc assuré d'une manière aussi simple que pour le pot de soudure.

## Revendications

1. Machine de soudage à la vague comprenant un bâti (12), au moins un pot de soudure (22) monté sur ledit bâti et comportant une buse (24) destinée à produire ladite vague, un convoyeur (26) monté sur ledit bâti et destiné à entraîner des cartes de circuits imprimés suivant un trajet sensiblement linéaire, et un dispositif de réglage en hauteur dudit pot de soudure, de manière à permettre l'ajustement en hauteur de ladite vague par rapport audit trajet, caractérisée en ce que ledit bâti (12) comporte un chemin de déplacement (28), de même orientation générale que ledit convoyeur, sur lequel est monté ledit pot de soudure (22), ledit chemin et ledit trajet faisant entre eux un angle prédéterminé de faible valeur et ledit chemin ayant une inclinaison aussi faible que possible par rapport à l'horizontale, et un dispositif de réglage (41) en position dudit pot de soudure le long dudit chemin de déplacement.

2. Machine selon la revendication 1, caractérisée en ce que ledit angle est inférieur à 10 degrés.

3. Machine selon l'une des revendications 1 et 2, caractérisée en ce que ledit pot de soudure (22) est monté sur son chemin de déplacement (28) par l'intermédiaire de roulements (38).

4. Machine selon l'une des revendications 1 ou 2, caractérisée en ce que ledit pot de soudure est monté sur son chemin de déplacement par l'intermédiaire de glissières.

5. Machine selon la revendication 3, caractérisée en ce que lesdits roulements sont constitués par des cages et/ou patins à billes.

6. Machine selon la revendication 3, caractérisée en ce que ledit chemin de déplacement comporte deux voies de roulement parallèles (30, 32).

7. Machine selon la revendication 6, caractérisée en ce que l'une desdites voies de roulement consiste en un rail (36).

8. Machine selon la revendication 7, caractérisée en ce que l'autre voie de roulement consiste en une portée plane (34).

9. Machine selon l'une des revendications 7 ou 8, caractérisée en ce que ledit rail (36) est un profilé de section triangulaire.

10. Machine selon la revendication 9, caractérisée en ce qu'elle comporte une tôle (14) en partie supérieure dudit bâti et que ledit profilé de section triangulaire est constitué de plis (40) ménagés dans ladite tôle.

11. Machine selon l'une quelconque des revendications 1 à 10, caractérisée en ce que ledit dispositif de réglage (41) est du type vis (42) — écrou (44) et orienté parallèlement audit chemin de déplacement (28).

12. Machine selon la revendication 11 caractérisée en ce que ladite vis (42) est montée sur le pot de soudure (22) et ledit écrou (44) est monté sur le bâti (12), ou vice-versa.

13. Machine selon la revendication 12, caractérisée en ce qu'elle comporte un moteur (46) d'entraînement de ladite vis.

14. Machine selon l'une quelconque des revendications 1 à 13 et comportant un dispositif de fluxage (16), caractérisée en ce que ledit dispositif de fluxage (16) est également monté sur ledit chemin de déplacement (28) et qu'elle comporte un dispositif de réglage en position dudit dispositif de fluxage le long du chemin de déplacement.

15. Machine selon l'une quelconque des revendications 1 à 14 et comportant un dispositif de préchauffage (18, 20), caractérisée en ce que ledit dispositif de préchauffage (18, 20) est également monté sur ledit chemin de déplacement (28) et qu'elle comporte un dispositif de réglage en position dudit dispositif de préchauffage le long du chemin de déplacement.

## Claims

1. Wave soldering machine of the type comprising a frame (12), at least one solder pot (22) mounted on said frame and equipped with a nozzle (24) designed to produce a wave of solder, a conveyor (26) mounted on said frame and designed to carry the printed circuit boards along a substantially linear path, and a device for adjusting the height of said solder pot, thus permitting the adjustment of the height of the wave with respect to said path, characterized in that said frame (12), comprises a moving track (28) of general direction similar to that of the conveyor and on which is mounted the solder pot (22), said path and track forming together a predetermined angle of small value, and said track having an inclination as small as possible with respect to the horizontal, and a device (41) for adjusting the position of the solder pot along said moving track.

2. Machine as claimed in claim 1, characterized in that said angle is less than 10 degrees.

3. Machine as claimed in either claim 1 or 2, characterized in that said solder pot (22) is mounted on its moving track (28) by way of roller members.

4. Machine as claimed in either claim 1 or 2, characterized in that said solder pot is mounted on its moving track by way of slide guides.

5. Machine as claimed in claim 3, characterized in that said roller members are constituted by ball bearing cages and/or pads.

6. Machine as claimed in claim 3, characterized in that said moving track comprises two parallel rolling tracks (30, 32).

7. Machine as claimed in claim 6, characterized in that one of said rolling tracks consists in a rail (36).

8. Machine as claimed in claim 7, characterized in that the other rolling track consists in a flat surface (34).

9. Machine as claimed in either claim 7 or 8, characterized in that the rail (36) is a triangular section piece.

10. Machine as claimed in claim 9, characterized in that a sheetplate (14) is provided at the top of the frame and said triangular section piece is constituted by bends (40) made in said sheetplate.

11. Machine as claimed in any one of claims 1 to 10, characterized in that the adjusting device (41) is of the screw (42) -and -nut (44) type and oriented in parallel to said moving track (28).

12. Machine as claimed in claim 11, characterized in that said screw (42) is mounted on the solder pot (22) and said nut (44) is mounted on the frame (12) or vice-versa.

13. Machine as claimed in claim 12, characterized in that a motor (46) is provided for driving said screw.

14. Machine as claimed in any one of claims 1 to 13, comprising a fluxing device (16), characterized in that said fluxing device (16) is also mounted on said moving track (28) and means are provided for adjusting the position of said fluxing device along the moving track.

15. Machine as claimed in any one of claims 1 to 14, comprising a pre-heating device (18, 20) characterized in that said pre-heating device is also mounted on said moving track (28) and means are provided for adjusting the position of said pre-heating device along the moving track.

**Patentansprüche**

1. Schwallotmaschine mit einem Rahmen (12), zumindest einer auf diesem Rahmen montierten Lotwanne (22), die eine Düse (24) aufweist, die dazu bestimmt ist, den Schwall herzustellen, mit einem Transportband (26), das auf dem Rahmen montiert ist und dazu dient, Leiterplatten entlang einer zumindest annähernd linearen Bahn zu führen und mit einer Regelvorrichtung für die Höhe der Lotwanne, die es erlaubt, die Höhe dieser Wanne bezüglich dieser Bahn einzustellen, dadurch gekennzeichnet, daß der Rahmen (12) eine Führung (28) die dieselbe allgemeine Richtung wie die Bahn hat, aufweist, wobei auf der Führung die Lötwanne (22) angeordnet ist und zwischen der Führung und der Bahn ein vorbestimmter kleiner Winkel eingeschlossen ist und die Führung bezüglich der Horizontalen eine möglichst kleine Neigung aufweist, wobei ein Positionsregler (41) für die Regelung der Lage der Lötwanne auf der Führung vorgesehen ist.

2. Vorrichtung nach Anspruch 1, dadurch gekennzeichnet, daß der Winkel kleiner als 10° ist.

3. Vorrichtung nach einem der Ansprüche 1 und 2, dadurch gekennzeichnet, daß die Lötwanne (22) auf der Führung (28) mittels Rolleinrichtungen (38) gelagert ist.

4. Vorrichtung nach einem der Ansprüche 1 oder 2, dadurch gekennzeichnet, daß die Lötwanne auf der Führung gleitend gelagert ist.

5. Vorrichtung nach Anspruch 3, dadurch gekennzeichnet, daß die Rolleinrichtungen aus Kugellagern und/oder Rollgleitschuhe bestehen.

6. Vorrichtung nach Anspruch 3, dadurch gekennzeichnet, daß die Führung zwei parallele Rollbahnen (30, 32) aufweist.

7. Vorrichtung nach Anspruch 6, dadurch gekennzeichnet, daß eine der Rollbahnen aus einer Schiene (36) besteht.

8. Vorrichtung nach Anspruch 7, dadurch gekennzeichnet, daß die andere Rollbahn aus einer ebenen Lauffläche (34) besteht.

9. Vorrichtung nach einem der Ansprüche 7 oder 8, dadurch gekennzeichnet, daß die Schiene (36) einen dreieckigen Querschnittsbereich aufweist.

10. Vorrichtung nach Anspruch 9, dadurch gekennzeichnet, daß sie ein Blech (14), teilweise oberhalb des Rahmens aufweist und daß das dreieckförmige Profil durch Falten (40) in diesem Blech gebildet wird.

11. Vorrichtung nach einem der Ansprüche 1 bis 10, dadurch gekennzeichnet, daß der Positionsregler (41) parallel zur Führung (28) ausgerichtet und vom Spindel-Mutter-Typ (42, 44) ist.

12. Vorrichtung nach Anspruch 11, dadurch gekennzeichnet, daß die Schraube (42) an der Lötwanne (22 und die Mutter (44) am Rahmen (12) oder umgekehrt befestigt ist.

13. Vorrichtung nach Anspruch 12, dadurch gekennzeichnet, daß ein Motor (46) zum Antrieb der Schraube vorgesehen ist.

14. Vorrichtung nach einem der Ansprüche 1 bis 13, mit einer Flußmittelverteilvorrichtung (16), dadurch gekennzeichnet, daß die Flußmittelverteilvorrichtung (16) ebenfalls auf der Führung (28) angeordnet ist und daß sie einen Positionsregler zur Einstellung ihrer Position entlang der Führung aufweist.

15. Vorrichtung nach einem der Ansprüche 1 bis 14 mit einer Vorwärmvorrichtung (18, 20), dadurch gekennzeichnet, daß die Vorwärmvorrichtung (18, 20) ebenfalls auf der Führung (28) angeordnet ist und daß sie einen Positionsregler zur Einstellung ihrer Position entlang der Führung aufweist.

Fig-1

*Fig-2*

*Fig-3*

Fig-4